# FASCICULE DE BREVET EUROPEEN

(11) **EP 4 608 663 B1**
(45) Date de publication et mention de la délivrance du brevet: **02.12.2026**
(21) Numéro de dépôt: 23793387.4
(22) Date de dépôt: 23.10.2023
(51) Int. Cl.: B60K 1/04, H01M 50/298

(54) **ENSEMBLE D'ALIMENTATION ÉLECTRIQUE D'UN VÉHICULE AUTOMOBILE ÉLECTRIQUE**
STROMVERSORGUNGSANORDNUNG EINES ELEKTRISCHEN KRAFTFAHRZEUGS
POWER SUPPLY ASSEMBLY OF AN ELECTRIC MOTOR VEHICLE

(30) Priorité: 28.10.2022 FR 2211245
(43) Date de publication de la demande: 03.09.2025
(73) Titulaire: Renault s.a.s, 92100 Boulogne Billancourt (FR)
(72) Inventeur: DURANY, Luis, 47008 Valladolid (ES)
(86) Numéro de dépôt international: PCT/EP2023/079422
(87) Numéro de publication internationale: WO 2024/088936

(56) Documents cités:
- WO-A1-2016/008567
- US-A1- 2020 361 301
- US-A1- 2021 143 377

## Description

La présente invention se rapporte à un ensemble d'alimentation électrique d'un véhicule automobile électrique.

Les ensembles d'alimentation électrique comportent usuellement un caisson monté sous la caisse du véhicule automobile, et une pluralité de modules de batteries d'accumulateurs installés à l'intérieur du caisson.

Aussi, les batteries d'accumulateurs délivrent des tensions élevées de l'ordre de 400 V par l'intermédiaire de câbles électriques appropriés.

Outre les batteries d'accumulateurs, et les câbles auxquels elles sont reliées, le caisson doit également accueillir des dispositifs de contrôle du fonctionnement des batteries, des éléments de connexion et aussi une boîte de connexion au véhicule.

Les modules de batteries d'accumulateurs sont d'une forme générale parallélépipédique rectangle et ils comprennent une face d'appui dans le fond du caisson, et à l'opposé, une face supérieure. Ils présentent quatre faces perpendiculaires à la face d'appui et à la face supérieure, et deux à deux parallèles. La face supérieure présentant des bordures adjacentes aux quatre faces.

Aussi, chaque module comprend un capot adapté à recouvrir la face supérieure. Le capot présente un rebord s'étendant perpendiculairement aux bordures adjacentes.

Quant aux câbles électriques, ils sont insérés dans une gaine annelée fendue pour pouvoir les préserver et mieux les isoler. Le diamètre externe de ces gaines est relativement important. Il est par exemple compris entre 10 mm et 15 mm.

Autrement dit, les modules de batteries d'accumulateurs sont prévus pour être juxtaposés à l'intérieur du caisson et ils sont dimensionnés de manière à s'étendre dans tout l'espace libre. Partant, le cheminement des câbles électriques soulève des difficultés. En effet, ils ne doivent pas être endommagés, voire sectionnés, par le mouvement relatif des modules de batteries d'accumulateurs et du caisson en cas de choc du véhicule.

Aussi, un problème qui se pose et que vise à résoudre la présente invention est de fournir un ensemble d'alimentation électrique dans lequel les câbles électriques sont préservés d'un risque d'endommagement.

WO 2016/008567 A1 divulgue un ensemble d'alimentation électrique d'un véhicule automobile électrique.

Dans ce but, il est proposé un ensemble d'alimentation électrique d'un véhicule automobile électrique comprenant un caisson adapté à être installé sous la caisse dudit véhicule automobile et au moins deux modules de batteries d'accumulateurs reliés à un câble électrique, installés à l'intérieur dudit caisson, chacun desdits modules présentant une face d'appui opposée à une face supérieure et quatre faces perpendiculaires aux faces d'appui et supérieure, ladite face supérieure présentant une bordure adjacente à l'une desdites quatre faces en définissant une arête, chacun desdits modules comprenant en outre un capot pour recouvrir ladite face supérieure, ledit capot présentant un rebord adapté à venir s'étendre sensiblement perpendiculairement à ladite bordure adjacente en retrait de ladite arête. Lesdits deux modules de batteries d'accumulateurs sont agencés à l'intérieur dudit caisson de façon que les deux une desdites quatre faces viennent en regard l'une de l'autre, tandis que les deux arêtes s'étendent parallèlement à distance l'une de l'autre et que les deux rebords des deux capots s'étendent en regard l'un de l'autre. Et les deux capots présentent deux languettes respectivement solidaires desdits deux rebords en regard, et s'étendant l'une vers l'autre respectivement en surplomb des bordures adjacentes pour pouvoir emprisonner localement ledit câble électrique entre lesdites deux arêtes et lesdites deux languettes.

Ainsi, une caractéristique de l'invention réside, dans la mise à profit de l'espace s'étendant entre deux rebords de capots de deux modules de batteries contigus pour le cheminement du câble électrique et aussi, dans la mise en œuvre de deux languettes venant s'étendre l'une vers l'autre depuis les deux capots pour l'emprisonner. De la sorte, et comme on l'expliquera plus en détail dans la suite de la description, le câble électrique est alors préservé du mouvement relatif des deux modules contigus, et au surplus, il est maintenu écarté du carter supérieur qui vient refermer le caisson.

Un tel mode de mise en œuvre permet de s'affranchir de lanières ou de colliers de fixation du câble, lesquels sont relativement encombrants.

Avantageusement, lesdites arêtes s'étendent l'une de l'autre à une première distance, tandis que lesdits rebords s'étendent à une seconde distance supérieure à ladite première distance. Ainsi, les arêtes s'étendent l'une de l'autre à une distance inférieure au diamètre du câble de manière à ce qu'il puisse venir s'y appuyer. Les rebords s'étendent l'un de l'autre, à une distance supérieure pour pouvoir délimiter un espace apte à accueillir le câble électrique.

Et, selon un mode de mise en œuvre de l'invention particulièrement avantageux, lesdites deux languettes s'étendent l'une vers l'autre jusqu'à une distance sensiblement égale à ladite première distance. Partant, comme on l'expliquera ci-après, le câble électrique est entraîné à force entre les deux languettes pour pouvoir être emprisonné entre les deux languettes et les deux arêtes. Aussi, le passage du câble électrique entre les deux languettes s'opère essentiellement grâce à une déformation du câble électrique et plus précisément de sa gaine comme on l'expliquera en détail dans la suite de la description.

En outre, chacune desdites languettes présente avantageusement une extrémité libre renflée. De la sorte, l'engagement du câble électrique est plus aisé et il ne risque pas d'être endommagé.

Préférentiellement, chacune desdites languettes présente une extrémité libre inclinée pour pouvoir accueillir ledit câble électrique. Autrement dit, les extrémités libres des languettes sont inclinées vers le centre du chemin de passage délimité par les deux arêtes et les deux rebords. Ainsi, l'engagement du câble électrique à l'intérieur du chemin de passage est facilité.

Selon une caractéristique particulière de mise en œuvre, chacun desdits capots est moulé d'une seule pièce en matériau polymère avec ladite languette. De la sorte, les languettes sont portées sur le rebord des capots à un coût marginal très avantageux, voisin du coût du surplus de matière nécessaire au moulage des languettes.

Préférentiellement, les deux capots présentent deux autres languettes espacées desdites deux languettes et respectivement solidaires desdits deux rebords en regard, et venant s'étendre l'une vers l'autre respectivement en surplomb des bordures adjacentes. Ainsi, deux paires de languettes sont espacées l'une de l'autre et permettent de mieux contenir le câble électrique dans le chemin de passage s'étendant entre les deux modules de batteries d'accumulateurs.

Selon un mode de réalisation de l'invention particulièrement avantageux, chacun desdits deux capots présente des nervures de renfort s'étendant sur lesdites languettes. De la sorte, des nervures de renfort permettent d'augmenter le moment quadratique des nervures, notamment lorsque le câble électrique est inséré entre les deux nervures en vis-à-vis.

Aussi, les deux une desdites quatre faces viennent en regard l'une de l'autre à une distance comprise avantageusement entre 9,5 mm et 10,5 mm. Partant, les deux arêtes y relatives sont espacées l'une de l'autre, sensiblement d'une même distance. Par ailleurs, les deux extrémités libres des deux languettes sont espacées l'une de l'autre d'une distance comparable, sensiblement inférieure. Elles sont par exemple espacées l'une de l'autre d'une distance comprise entre 8 mm et 9 mm, cette distance étant typiquement de 8,63 mm dans l'exemple illustré.

De plus, l'extrémité libre de chaque languette est avantageusement espacée de l'arête correspondante dont elle vient en surplomb, d'une même distance comprise entre 6 mm et 7 mm, cette distance étant typiquement de 6,73 mm dans l'exemple illustré.

De plus on observera que le câble électrique vient s'étendre dans une gaine annulaire fendue, par exemple en polypropylène, laquelle gaine est relativement compressible.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique partielle en coupe droite longitudinale d'un ensemble d'alimentation électrique conforme à l'invention ;
[Fig. 2] est une vue schématique en perspective d'éléments de l'ensemble d'alimentation électrique selon invention ;
[Fig. 3] est une vue schématique de détail en perspective de l'objet de la [Fig. 2] ;
[Fig. 4] est une vue schématique de détail en coupe droite selon le plan IV-IV repéré sur la [Fig. 2] ;
[Fig. 5] est une vue schématique de l'objet de la [Fig. 4] incluant un autre élément dans une première phase de montage ; et,
[Fig. 6] est une vue schématique de l'objet de la [Fig. 5] dans une deuxième phase de montage.

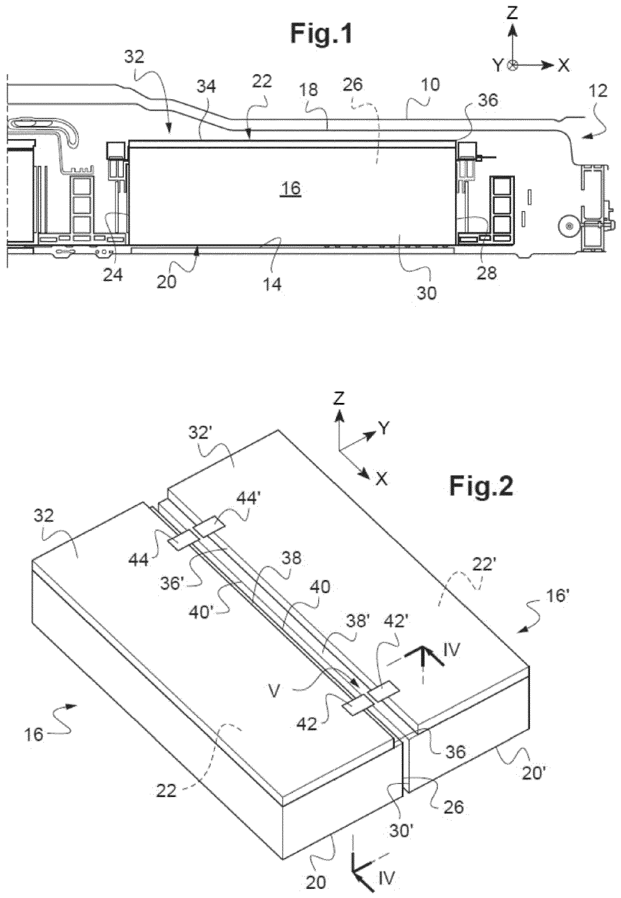

La [Fig. 1] montre en coupe droite verticale, et partiellement, un ensemble d'alimentation électrique conforme à l'invention. Aussi il s'inscrit dans un repère orthogonal X, Y, Z, dans lequel l'axe X s'étend selon une direction longitudinale avant-arrière du véhicule automobile, orienté vers l'arrière ; l'axe Y s'étend selon une direction transversale du véhicule, orienté de la gauche vers la droite ; et l'axe Z s'étend selon une direction verticale, orienté à l'opposé du sol.

Ainsi, la [Fig. 1] Illustre le plancher 10 d'un véhicule automobile en dessous duquel est installé un caisson 12. Le caisson 12 comporte une paroi de fond 14 sur laquelle est en appui un module de batteries d'accumulateurs 16. Le caisson est refermé par un carter 18.

Le module de batteries d'accumulateurs 16 inclut une pluralité de cellules de type lithium-ion reliées entre elles jusqu'au deux bornes du module 16.

Aussi, le module 16 est de forme parallélépipédique rectangle. Ainsi, il présente une face d'appui 20 en appui sur la paroi de fond 14 du caisson 12, et à l'opposé, une face supérieure 22. Il présente également quatre faces, deux à deux opposées les unes des autres et perpendiculaires aux faces d'appui 20 et supérieure 22 : une face antérieure 24 opposée à une face postérieure 28, et une face latérale droite 26 opposée à une face latérale gauche 30.

En outre, la face supérieure 22 du module 16 est recouverte d'un capot 32, lequel présente un fond 34 et un rebord 36 coopérant avec la face supérieure 22.

Ainsi, une pluralité de modules 16 sont installés à l'intérieur du caisson 12, et leurs bornes sont respectivement reliées entre elles et réunies dans au moins un câble électrique non représenté ici.

On se reportera sur la [Fig. 2] montrant deux modules identiques, un premier 16, un second 16', contigus, tels qu'ils sont ajustés à l'intérieur du caisson 12. D'autres paires de modules sont avantageusement insérées à l'intérieur du caisson 12 selon une configuration identique.

Les deux modules 16, 16' sont ajustés côte à côte, face latérale droite 26 du premier 16 en regard de la face latérale gauche 30' du second 16'.

Aussi, les faces supérieures 22, 22' des deux modules 16, 16', définissent deux bordures adjacentes 38, 38' aux faces, latérale droite 26 et latérale gauche 30' respectivement. Et les deux bordures adjacentes 38, 38' forment avec les faces, latérale droite 26 et latérale gauche 30' respectivement, deux arêtes parallèles 40, 40'. Aussi, les deux rebords 36, 36' des capots 32, 32' sont ajustés perpendiculairement aux bordures adjacentes 38, 38' respectivement et en retrait de leurs arêtes 40, 40'.

En outre, conformément à l'invention, les deux capots 32, 32' présentent deux premières languettes 42, 42' s'étendant l'une vers l'autre en saillie des deux rebords 36, 36' respectivement et en surplomb des bordures adjacentes 38, 38'.

De surcroît, les deux capots 32, 32' présentent deux secondes languettes 44, 44' à distance des deux premières 42, 42'.

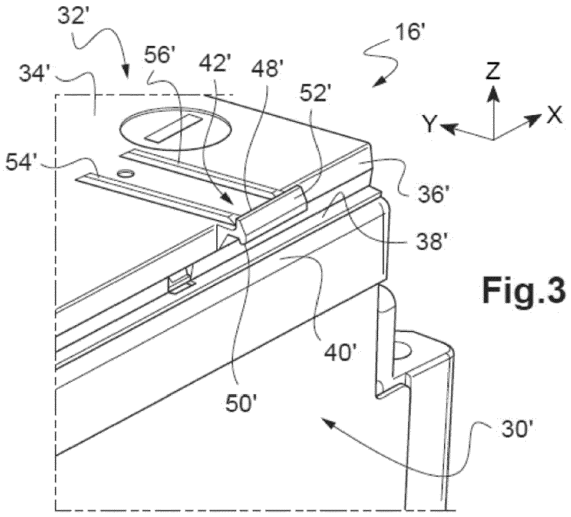

Aussi, on se reportera sur la [Fig. 3] montrant partiellement et en détail le second module 16' selon la flèche V référencée sur la [Fig. 2], et plus précisément, la première languette 42' s'étendant du rebord 36' du capot 32' recouvrant le second module 16'. On retrouve la bordure adjacente 38' et l'arête 40' qu'elle forme avec la face latérale gauche 30'.

On observera que la languette 42' s'étend en saillie du rebord 36' du capot 32' selon la direction Y sur une longueur comprise par exemple entre 6 mm et 7,5 mm, tandis qu'elle s'étend transversalement selon la direction X sur une largeur comprise entre 20 mm et 30 mm par exemple.

Par ailleurs, elle présente une extrémité libre en T 46' sensiblement déformée définissant une aile supérieure 48' opposée à une aile inférieure 50'. Les deux ailes 48' et 50' définissent une surface d'accostage 52' inclinée, l'aile supérieure 48' rapprochée du fond 34' du capot 32', l'aile inférieure 50' sensiblement écartée du rebord 36'.

Aussi, le capot 32' présente deux nervures de renfort 54', 56' sensiblement parallèles et venant s'étendre dans la languette 42' jusqu'à l'aile supérieure 48'. Ces deux nervures de renfort 54', 56' permettent d'augmenter le moment quadratique de la languette 42'.

On observera que le capot 32, 32', est moulé d'une seule pièce avec les languettes 42, 42' et les nervures de renfort 54, 56, 54', 56' dans un même matériau polymère. De la sorte, le coût supplémentaire de mise en œuvre de ces languettes 42, 42' est voisin du coût supplémentaire de matériau polymère pour les réaliser. Ce coût est donc par nature modique.

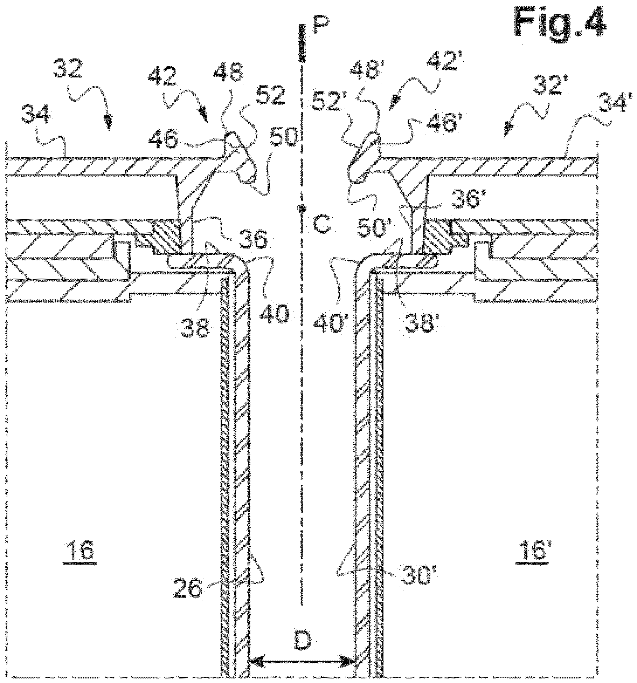

On se reportera à présent sur la [Fig. 4] représentant plus en détail les deux languettes 42, 42' en regard l'une de l'autre, selon le plan de coupe IV - IV illustré sur la [Fig. 2]. On retrouve ainsi les deux faces latérales en regard 26, 30' des deux modules 16, 16', les deux arêtes parallèles entre elles 40, 40' et les deux rebords 36, 36' en regard, ainsi que les deux languettes 42, 42' en surplomb des deux bordures adjacentes 38, 38'. Aussi, les deux ailes inférieures 50, 50' et les deux arêtes 40, 40' définissent un trapèze dont les diagonales se croisent en C, centre d'un chemin de passage entre les deux modules 16, 16' et leur capot 32, 32' respectivement.

Ainsi, les deux faces latérales en regard 26, 30' des deux modules 16, 16' sont espacées d'une distance D de 10 mm par exemple. Partant, les deux arêtes 40, 40' sont espacées sensiblement d'une même distance. Aussi, les deux ailes inférieures 50, 50' sont également espacées l'une de l'autre d'une distance voisine de la distance D, tandis que les deux rebords 36, 36' sont espacées d'une distance comprise entre 20 mm et 25 mm par exemple.

En outre, les ailes inférieures 50, 50' des extrémités libres 46, 46' des languettes 42, 42' sont respectivement espacées des arêtes 40, 40' qu'elles surplombent respectivement, d'une distance comprise entre 6 mm et 7 mm, par exemple.

Par ailleurs, on observera que les deux faces latérales en regard 26, 30' des deux modules 16, 16', les deux arêtes parallèles entre elles 40, 40' et les deux rebords 36, 36' en regard, ainsi que les deux languettes 42, 42' sont symétriques respectivement les uns des autres par rapport au plan médian P qui s'étend entre les deux modules 16, 16'.

On observera que les deux modules 16, 16' sont maintenus en position fixe sur la paroi de fond 14 du caisson 12.

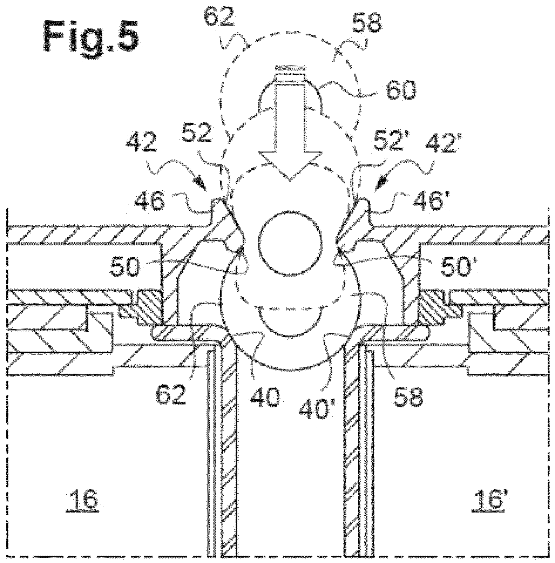

Ainsi, un câble électrique 58 illustré sur la [Fig. 5] dans quatre positions successives va alors être inséré entre les deux modules 16, 16' comme on va l'expliquer ci-après. Tout d'abord, le câble électrique 58 comprend un noyau 60 comportant une âme en cuivre insérée dans une première gaine en polychlorure de vinyle par exemple. Et le noyau 60 est alors engagé dans une seconde gaine annelée fendue 62 relativement épaisse, réalisée par exemple en polypropylène.

Le noyau 60 présente par exemple un diamètre compris entre 6 mm et 8 mm, tandis que la gaine annelée 62 présente un diamètre extérieur compris entre 13 mm et 14 mm par exemple.

Ainsi, dans une première étape, le câble électrique 58 est porté en appui contre les deux surfaces d'accostage 52, 52' des deux extrémités libres en T 46, 46' des deux languettes 42, 42' respectivement.

Ensuite, dans une deuxième étape le câble électrique 58 est entraîné à force entre les surfaces d'accostage 52, 52' vers les deux arêtes 40, 40'. Les surfaces d'accostage 52, 52' inclinée l'une vers l'autre facilite le passage du câble électrique 58.

Partant, le câble électrique 58 est étranglé entre les deux ailes inférieures 50, 50'. Autrement dit, la seule gaine annelée 62 se déforme et se contracte axialement et localement.

Puis, le câble électrique 58 est forcé plus encore entre les deux ailes inférieures 50, 50' jusqu'à venir en appui contre les arêtes 40, 40'.

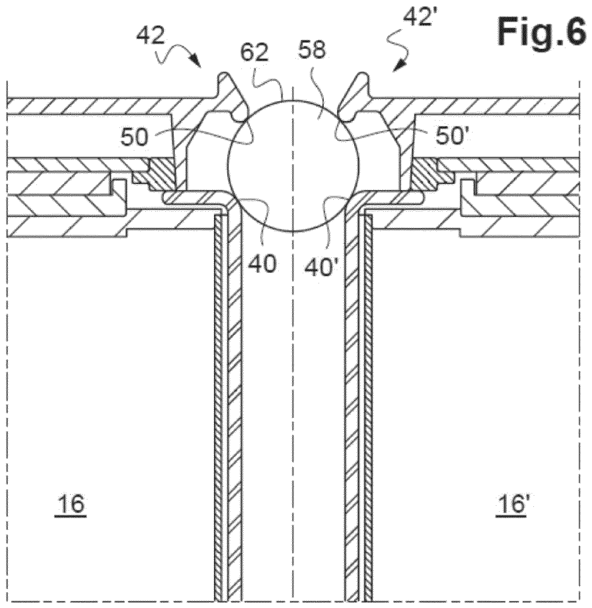

Dans cette position, telle que représentée sur la [Fig. 6], la gaine annelée 62 du câble électrique 58 a retrouvé sa forme originelle et elle demeure également en appui contre les deux ailes inférieures 50, 50'.

Autrement dit, le câble électrique 58 est localement en prise entre les deux arêtes 40, 40' et les deux ailes inférieures 50, 50' des deux languettes 42, 42' qui les surplombent. Aussi, on procède de la même façon pour insérer le câble électrique 58 entre les deux secondes languettes 44, 44' illustrées sur la [Fig. 2] à distance des deux premières 42, 42'.

De la sorte, le câble électrique 58 demeure en position fixe étendu au sommet des modules contigus 16, 16' et en prise localement entre les deux arêtes 40, 40' et les deux ailes inférieures 50, 50'.

Ainsi cet espace libre inhérent à la construction de l'ensemble d'alimentation électrique conforme à l'invention, est mis à profit pour le passage des câbles électriques. Par ailleurs, on observera que si les deux modules 16, 16' étaient contraints de se rapprocher l'un de l'autre, lors d'un choc par exemple, le câble électrique 58 aurait tendance à être repoussé verticalement à travers les languettes 42, 42' sans être endommagé.

## Revendications

1. Ensemble d'alimentation électrique d'un véhicule automobile électrique comprenant un caisson (12) adapté à être installé sous la caisse dudit véhicule automobile et au moins deux modules de batteries d'accumulateurs (16, 16') reliés à un câble électrique, installés à l'intérieur dudit caisson, chacun desdits modules présentant une face d'appui (20, 20') opposée à une face supérieure (22, 22') et quatre faces perpendiculaires aux faces d'appui et supérieure, chacun desdits modules comprenant en outre un capot (32, 32') pour recouvrir ladite face supérieure, lesdits deux modules de batteries d'accumulateurs (16, 16') sont agencés à l'intérieur dudit caisson (12) de façon que les deux une desdites quatre faces (26, 30') viennent en regard l'une de l'autre,
**caractérisé en ce que**
ladite face supérieure présentant une bordure adjacente (38, 38') à l'une (26, 30') desdites quatre faces en définissant une arête (40, 40'), ledit capot présentant un rebord (36, 36') adapté à venir s'étendre sensiblement perpendiculairement à ladite bordure adjacente (38, 38') en retrait de ladite arête ;
et **en ce que**
les deux arêtes (40, 40') s'étendent parallèlement à distance l'une de l'autre et que les deux rebords (36, 36') des deux capots s'étendent en regard l'un de l'autre ;
et **en ce que**
les deux capots (32, 32') présentent deux languettes (42, 42') respectivement solidaires desdits deux rebords en regard (36, 36'), et venant s'étendre l'une vers l'autre respectivement en surplomb des bordures adjacentes (38, 38') pour pouvoir emprisonner localement ledit câble électrique (58) entre lesdites deux arêtes (40, 40') et lesdites deux languettes (42, 42').

2. Ensemble d'alimentation électrique selon la revendication 1, **caractérisé en ce que** lesdites arêtes (40, 40') s'étendent l'une de l'autre à une première distance, tandis que lesdits rebords (36, 36') s'étendent à une seconde distance supérieure à ladite première distance.

3. Ensemble d'alimentation électrique selon la revendication 2, **caractérisé en ce que** lesdites deux languettes (42, 42') s'étendent l'une vers l'autre jusqu'à une distance sensiblement égale à ladite première distance.

4. Ensemble d'alimentation électrique selon la revendication 2 ou 3, **caractérisé en ce que** chacune desdites languettes (42, 42') présente une extrémité libre (46, 46') renflée.

5. Ensemble d'alimentation électrique selon l'une quelconque des revendications 2 à 4, **caractérisé en ce que** chacune desdites languettes (42, 42') présente une extrémité libre (46, 46') inclinée pour pouvoir accueillir ledit câble électrique (58).

6. Ensemble d'alimentation électrique selon l'une quelconque des revendication 1 à 5, **caractérisé en ce que** chacun desdits capots (32, 32') est moulé d'une seule pièce en matériau polymère avec ladite languette (42, 42').

7. Ensemble d'alimentation électrique selon l'une quelconque des revendication 1 à 6, **caractérisé en ce que** les deux capots (32, 32') présentent deux autres languettes (44, 44') espacées desdites deux languettes (42, 42') et respectivement solidaires desdits deux rebords en regard (36, 36'), et venant s'étendre l'une vers l'autre respectivement en surplomb des bordures adjacentes (38, 38').

8. Ensemble d'alimentation électrique selon l'une quelconque des revendication 1 à 7, **caractérisé en ce que** chacun desdits deux capots (32, 32') présente des nervures de renfort (54', 56') s'étendant sur lesdites languettes (42').

9. Ensemble d'alimentation électrique selon l'une quelconque des revendication 1 à 8, **caractérisé en ce que** les deux une desdites quatre faces (26, 30') viennent en regard l'une de l'autre à une distance comprise entre 9,5 mm et 10,5 mm.

## Patentansprüche

1. Anordnung zur elektrischen Versorgung eines elektrischen Kraftfahrzeugs, umfassend ein Gehäuse (12), das dazu angepasst ist, unter der Karosserie des Kraftfahrzeugs installiert zu werden, und mindestens zwei Speicherbatteriemodule (16, 16'), die mit einem elektrischen Kabel verbunden sind und im Inneren des Gehäuses installiert sind, wobei jedes der Module eine Auflagefläche (20, 20'), die zu einer oberen Fläche (22, 22') entgegengesetzt ist, und vier Flächen senkrecht zu der Auflagefläche und der oberen Fläche aufweist, wobei jedes der Module ferner eine Abdeckung (32, 32') zum Abdecken der oberen Fläche umfasst,
wobei die beiden Speicherbatteriemodule (16, 16') in dem Gehäuse (12) so angeordnet sind, dass die beiden eine der vier Flächen (26, 30') einander zugewandt sind, **dadurch gekennzeichnet, dass** die obere Fläche einen Rand (38, 38') aufweist, der an eine (26, 30') der vier Flächen angrenzt, wobei eine Kante (40, 40') definiert wird, wobei die Abdeckung einen Steg (36, 36') aufweist, der dazu angepasst ist, sich im Wesentlichen senkrecht zu dem angrenzenden Rand (38, 38') von der Kante zurückversetzt zu erstrecken; und dass sich die beiden Kanten (40, 40') parallel im Abstand voneinander erstrecken und dass sich die beiden Stege (36, 36') der beiden Abdeckungen einander zugewandt erstrecken;
und dass die beiden Abdeckungen (32, 32') zwei Laschen (42, 42') aufweisen, die jeweils integral mit den beiden zugewandten Stegen (36, 36') ausgebildet sind und sich zueinander hin erstrecken, wobei sie jeweils über die angrenzenden Ränder (38, 38') hinausragen, um das elektrische Kabel (58) zwischen den beiden Kanten (40, 40') und den beiden Laschen (42, 42') lokal einklemmen zu können.

2. Anordnung zur elektrischen Versorgung nach Anspruch 1, **dadurch gekennzeichnet, dass** sich die Kanten (40, 40') in einem ersten Abstand voneinander erstrecken, während sich die Stege (36, 36') in einem zweiten Abstand erstrecken, der größer als der erste Abstand ist.

3. Anordnung zur elektrischen Versorgung nach Anspruch 2, **dadurch gekennzeichnet, dass** sich die beiden Laschen (42, 42') bis zu einem Abstand zueinander hin erstrecken, der im Wesentlichen gleich dem ersten Abstand ist.

4. Anordnung zur elektrischen Versorgung nach Anspruch 2 oder 3, **dadurch gekennzeichnet, dass** jede der Laschen (42, 42') ein wulstiges freies Ende (46, 46') aufweist.

5. Anordnung zur elektrischen Versorgung nach einem der Ansprüche 2 bis 4, **dadurch gekennzeichnet, dass** jede der Laschen (42, 42') ein abgeschrägtes freies Ende (46, 46') aufweist, um das elektrische Kabel (58) aufnehmen zu können.

6. Anordnung zur elektrischen Versorgung nach einem der Ansprüche 1 bis 5, **dadurch gekennzeichnet, dass** jede der Abdeckungen (32, 32') einstückig aus polymerem Material mit der Lasche (42, 42') geformt ist.

7. Anordnung zur elektrischen Versorgung nach einem der Ansprüche 1 bis 6, **dadurch gekennzeichnet, dass** die beiden Abdeckungen (32, 32') zwei weitere Laschen (44, 44') aufweisen, die von den beiden Laschen (42, 42') beabstandet sind und jeweils integral mit den beiden zugewandten Stegen (36, 36') ausgebildet sind und die sich zueinander hin erstrecken, wobei sie über die angrenzenden Ränder (38, 38') hinausragen.

8. Anordnung zur elektrischen Versorgung nach einem der Ansprüche 1 bis 7, **dadurch gekennzeichnet, dass** jede der beiden Abdeckungen (32, 32') Verstärkungsrippen (54', 56') aufweist, die sich auf den Laschen (42') erstrecken.

9. Anordnung zur elektrischen Versorgung nach einem der Ansprüche 1 bis 8, **dadurch gekennzeichnet, dass** die beiden eine der vier Flächen (26, 30') einander in einem Abstand zwischen 9,5 mm und 10,5 mm zugewandt sind.

## Claims

1. Electric power supply assembly for an electric motor vehicle comprising a compartment (12) suitable for being installed underneath the bodyshell of said motor vehicle and at least two accumulator-battery modules (16, 16') which are connected to an electric cable, and are installed inside said compartment, each of said modules having a bearing face (20, 20') opposite an upper face (22, 22') and four faces perpendicular to the bearing and upper faces, each of said modules further comprising a cover (32, 32') for covering said upper face,
said two accumulator-battery modules (16, 16') are arranged inside said compartment (12) in such a way that the two, one of said four, faces (26, 30') are set facing one another, **characterized in that** said upper face having a bordering lip (38, 38') adjacent to one (26, 30') of said four faces thereby defining an intersection-edge (40, 40'), said cover having a rim (36, 36') suitable for extending substantially perpendicular to said adjacent bordering lip (38, 38') and set back from said intersection-edge; and **in that** the two intersection-edges (40, 40') extend parallel to and some distance from one another and the two rims (36, 36') of the two covers extend facing one another;
and **in that** the two covers (32, 32') have two tabs (42, 42') respectively secured to said two mutually facing rims (36, 36') and extending one towards the other so that they respectively overhang the adjacent bordering lips (38, 38') so that said electric cable (58) can be locally trapped between said two intersection-edges (40, 40') and said two tabs (42, 42').

2. Electric power supply assembly according to Claim 1, **characterized in that** said intersection-edges (40, 40') extend with respect to one another at a first distance apart, while said rims (36, 36') extend at a second distance greater than said first distance.

3. Electric power supply assembly according to Claim 2, **characterized in that** said two tabs (42, 42') extend towards one another until they are separated by a distance substantially equal to said first distance.

4. Electric power supply assembly according to Claim 2 or 3, **characterized in that** each of said tabs (42, 42') has a thickened free end (46, 46').

5. Electric power supply assembly according to any one of Claims 2 to 4, **characterized in that** each of said tabs (42, 42') has a free end (46, 46') that is inclined so as to be able to accommodate said electric cable (58).

6. Electric power supply assembly according to any one of Claims 1 to 5, **characterized in that** each of said covers (32, 32') is moulded as a single piece with said tab (42, 42') from a polymer material.

7. Electric power supply assembly according to any one of Claims 1 to 6, **characterized in that** the two covers (32, 32') have two other tabs (44, 44') spaced away from said two tabs (42, 42') and respectively secured to said two mutually facing rims (36, 36') and that extend towards one another respectively overhanging the adjacent bordering lips (38, 38').

8. Electric power supply assembly according to any one of Claims 1 to 7, **characterized in that** each of said two covers (32, 32') has reinforcing ribs (54', 56') extending along said tabs (42').

9. Electric power supply assembly according to any one of Claims 1 to 8, **characterized in that** the two, one of said four, faces (26, 30') are set facing one another at a distance of between 9.5 mm and 10.5 mm.
